# EUROPEAN PATENT SPECIFICATION

(11) **EP 3 199 766 B1**
(45) Date of publication and mention of the grant of the patent: **24.11.2021**
(21) Application number: 17153709.5
(22) Date of filing: 30.01.2017
(51) Int. Cl.: F01D 7/00, F04D 29/36

(54) **VARIABLE PITCH FAN BLADE ARRANGEMENT FOR GAS TURBINE ENGINE**
ANORDNUNG EINES GEBLÄSES MIT VERSTELLBARER NEIGUNG FÜR EIN GASTURBINENTRIEBWERK
AGENCEMENT DE PALE DE SOUFFLANTE À PAS VARIABLE POUR MOTEUR À TURBINE À GAZ

(30) Priority: 29.01.2016 US 201615009868
(43) Date of publication of application: 02.08.2017
(73) Proprietor: Raytheon Technologies Corporation, Farmington, CT 06032 (US)
(72) Inventor: BINTZ, Matthew E., West Hartford, CT 06107 (US); SCHWARZ, Frederick M., Glastonbury, CT 06033 (US); DONG, Yuan, Glasbontury, CT 06033 (US)
(74) Representative: Dehns

(56) References cited:
- WO-A1-2014/176427
- WO-A1-2015/047842
- US-A- 4 968 217
- US-A1- 2015 125 259
- US-A1- 2015 369 078

## Description

### TECHNICAL FIELD

This invention relates generally to a fan section for gas turbine engines, and more particularly to modulating fan airflow utilizing variable pitch fan blades.

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

The fan section includes multiple fan blades disposed circumferentially about an engine longitudinal centerline axis. At certain aircraft operating conditions, these fan blades may experience instability such as stall or flutter. Instability can cause vibration and fracture in the fan blades and other parts of the engine. To avoid instability, fan blades may have to be made thicker or longer, or the blade angle may be altered from optimum for efficiency. These measures result in weight increase or performance debit.

WO 2015/047842 A1 discloses a gas turbine engine as recited in the preamble of claim 1.

US 2015/125259 A1 discloses a gas turbine engine variable pitch fan blade. US 4,968,217 discloses a variable pitch arrangement for a gas turbine engine.

### SUMMARY

From a first aspect, the invention provides a gas turbine engine as recited in claim 1.

In an embodiment of the foregoing, the dimensional relationship of L/D is equal to or greater than about 0.24.

In a further embodiment of any of the foregoing embodiments, the plurality of fan blades includes a first fan blade and a second fan blade. The first fan blade is rotatable such that an orientation of the first fan blade differs from an orientation of the second fan blade relative to the engine axis.

A further embodiment of any of the foregoing embodiments includes a fixed area fan nozzle in communication with the fan section.

A further embodiment of any of the foregoing embodiments includes a geared architecture driven by a turbine section.

In a further embodiment of any of the foregoing embodiments, the nacelle assembly includes a thrust reverser configured to selectively communicate a portion of fan bypass airflow from the bypass flow path.

In a further embodiment of any of the foregoing embodiments, the nacelle assembly includes a first nacelle section arranged at least partially about the fan, and a second nacelle section arranged at least partially about a core cowling to define the bypass flow path. The thrust reverser is positioned axially between the first nacelle section and the second nacelle section, and the second nacelle section is moveable relative to the first nacelle section to vary an exit area of the bypass flow path.

In a further embodiment of any of the foregoing embodiments, the nacelle assembly includes a variable area fan nozzle movable relative to the second nacelle section to vary the exit area.

In a further embodiment of any of the foregoing embodiments, the fan includes between 12 and 20 fan blades. The fan is configured to deliver a portion of air into a compressor section and a portion of air into the bypass flow path, and a bypass ratio which is defined as a volume of air passing to the bypass flow path compared to a volume of air passing into the compressor section, is greater than or equal to 12.

In a further embodiment of any of the foregoing embodiments, the fan is configured to define a pressure ratio of between 1.2 and 1.4 at a predefined operating condition.

The invention also provides a method of operating a gas turbine engine as recited in claim 11.

An embodiment of the foregoing includes rotating at least one of the plurality of fan blades to a first orientation during a first operating condition such that the first orientation differs from a second orientation of an adjacent one of the plurality of fan blades.

A further embodiment of any of the foregoing embodiments includes rotating the at least one of the plurality of fan blades during a second operating condition to a third orientation that is substantially the same as the second orientation.

A further embodiment of any of the foregoing embodiments includes communicating fan bypass airflow from the bypass duct to generate reverse thrust.

A further embodiment of any of the foregoing embodiments includes moving a second nacelle section relative to a first nacelle section to vary an exit area of the bypass duct.

A further embodiment of any of the foregoing embodiments includes communicating a portion of fan bypass airflow from the bypass duct to generate an amount of reverse thrust.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 is a schematic view of an example gas turbine engine.
Figure 2A is a schematic view of an example nacelle assembly in a deployed position.
Figure 2B is a schematic view of the example nacelle assembly of Figure 2A in a stowed position.
Figure 3A is a partial cross section view of a thrust reverser and a variable area nozzle in stowed positions.
Figure 3B is a partial cross section view of the thrust reverser of Figure 3A in the stowed position and the variable area nozzle of Figure 3A in a deployed position.
Figure 3C is a partial cross section view of the thrust reverser and the variable area nozzle of Figure 3A in deployed positions.
Figure 4 is a perspective view of an example of a fan.
Figure 5 is a partial cross-sectional view of the fan of Figure 4.
Figure 6 is a radial view of adjacent fan blades of the fan of Figure 4 depicted at several example orientations.

### DETAILED DESCRIPTION

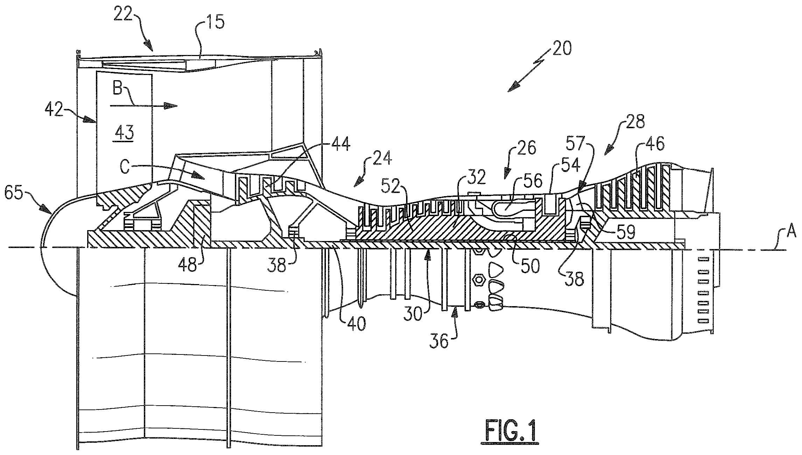

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. In embodiments, the low pressure compressor 44 has between two and eight stages, such as three stages, and has fewer or the same number of stages as the high pressure compressor 52. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6) and less than or equal to about thirty (30), or more narrowly less than or equal to about twenty (20), with an example embodiment being greater than about ten (10), the geared architecture 48 is an epicyclic gear train, such as a planetary gear system or other gear system, with a gear reduction ratio of greater than or equal to about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). In a further embodiment, the bypass ratio is greater than or equal to about twelve (12:1). Low pressure turbine 46 pressure ratio is pressure measured prior to inlet of low pressure turbine 46 as related to the pressure at the outlet of the low pressure turbine 46 prior to an exhaust nozzle. In embodiments, the low pressure turbine 46 has between three and six stages, such as five stages, and the high pressure turbine 54 has fewer stages than the low pressure turbine 46, such as one or two stages. The geared architecture 48 may be an epicycle gear train, such as a planetary gear system or other gear system, with a gear reduction ratio of greater than or equal to about 2.3:1, or more narrowly greater than or equal to about 2.5:1. In some embodiments, the gear reduction ratio is less than about 5.0, or less than about 4.0. In further embodiments, the gear reduction ratio is between about 2.4 and about 3.1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.5, or more narrowly less than about 1.45. In some embodiments, the fan pressure ratio is between about 1.2 and about 1.4 at a predefined or predetermined operating condition of the aircraft operating cycle, such as at takeoff or cruise. "Low corrected fan tip speed" is the actual fan tip speed in ft/sec divided by an industry standard temperature correction of [(Tram °R) / (518.7 °R)]^{∧0.5}. The "Low corrected fan tip speed" as disclosed herein according to one non-limiting embodiment is less than about 1150 ft / second (350.5 meters/second).

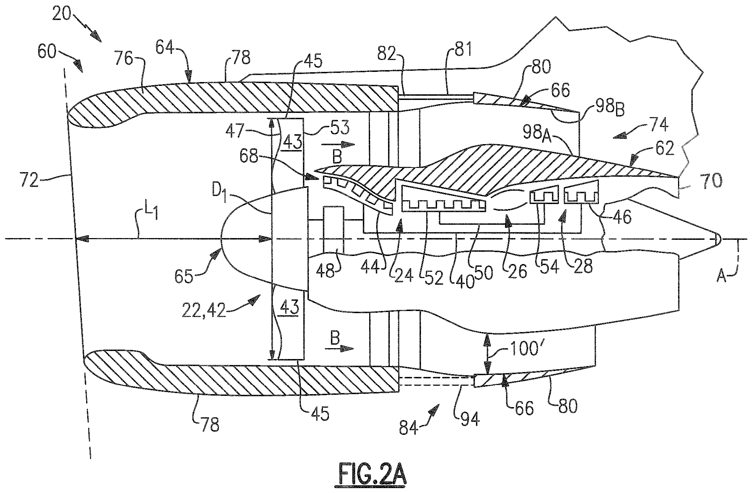

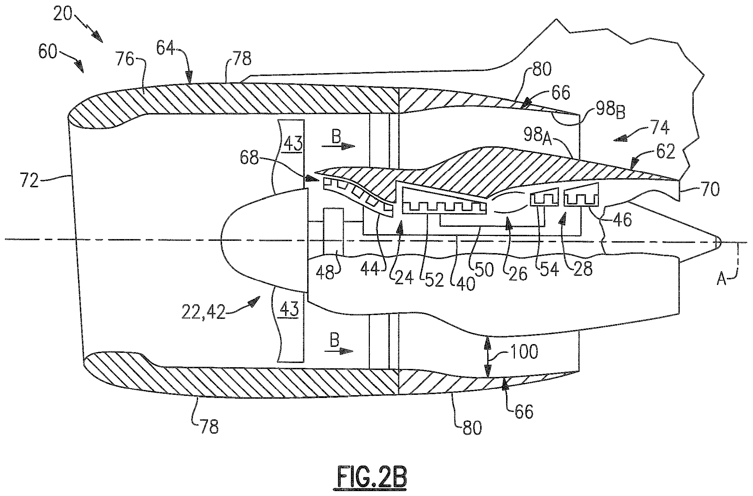

Referring to Figures 2A and 2B, a nacelle assembly 60 is shown disposed about the engine axis A. The nacelle assembly 60 includes a core cowling 62, a fan nacelle 64 and a duct 66 defining the bypass flow path B. The core cowling 62 extends circumferentially around and at least partially houses the engine sections 24, 26, 28 and geared architecture 48. The core cowling 62 extends axially along the engine axis A between a core inlet 68 and a core nozzle 70 of the core flow path C downstream of the core inlet 68.

The fan nacelle 64 extends circumferentially around and houses the fan 42 and at least a portion of the core cowling 62, thereby defining the bypass flow path B. The fan nacelle 64 extends axially along the engine axis A between a nacelle inlet 72 and a bypass nozzle 74 of the bypass flow path B downstream of the nacelle inlet 72. An inlet portion 76 of fan nacelle 64 defines the nacelle inlet 72. The inlet portion 76 extends axially between the nacelle inlet 72 and the fan 42. The inlet portion 76 can be configured such that the nacelle inlet 72 is either substantially transverse or substantially perpendicular to the engine axis A.

The nacelle assembly 60 can be configured to have a relatively short inlet portion to improve aerodynamic performance. The fan 42 includes a plurality of fan blades 43 each having an airfoil body extending between a leading edge 47 and a trailing edge 53. An axial position of the leading edge 47 of each of the fan blades 43 may be substantially the same or vary at different span or radial positions. The fan blades 43 establish a fan diameter Di between circumferentially outermost edges or tips 45 of the fan blades 43 corresponding to leading edges 47. The fan diameter Di is shown as a dimension extending between the edges 45 of two of the fan blades 43 that are parallel to each other and extending in opposite directions away from the engine axis A. A length Li of the inlet portion 76 is established between nacelle inlet 72 at the engine axis A and an intersection of a plane defining the fan diameter Di, with the plane being generally perpendicular to the engine axis A.

A dimensional relationship or ratio of L₁/D₁ is less than or equal to about 0.4. In embodiments, the ratio of L₁/D₁ is equal to or greater than about 0.2, or more narrowly between about 0.24 and about 0.4. For the purposes of this disclosure, the term "about" means ±3 percent unless otherwise stated. Providing a relatively shorter inlet portion 76 facilitates reducing the weight and length of the nacelle assembly 60, and also reduces external drag. Additionally, having a shorter inlet portion 76 can reduce the bending moment and corresponding load on the engine structure during flight conditions.

In some embodiments, the fan nacelle 64 includes a stationary forward (or first) section 78 and an aft (or second) nacelle section 80. The aft nacelle section 80 is moveable relative to the stationary forward section 78, and for example, is configured to selectively translate axially along a supporting structure such as a plurality of guides or tracks 81 (Fig. 2A). In alternative embodiments, the nacelle assembly 60 includes a fixed area fan nozzle such that bypass nozzle 74 is substantially fixed relative to the nacelle inlet 72 or engine axis A and an exit area of the bypass flow path B remains substantially constant.

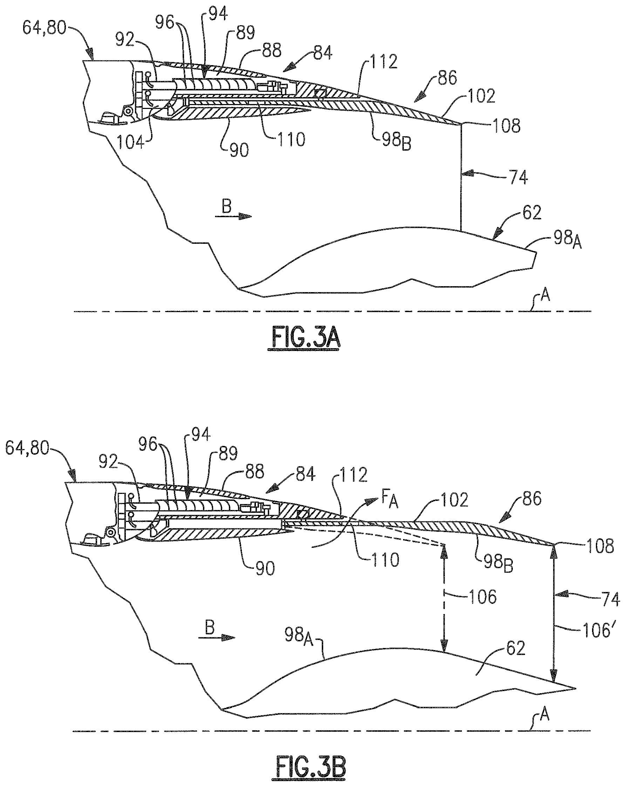

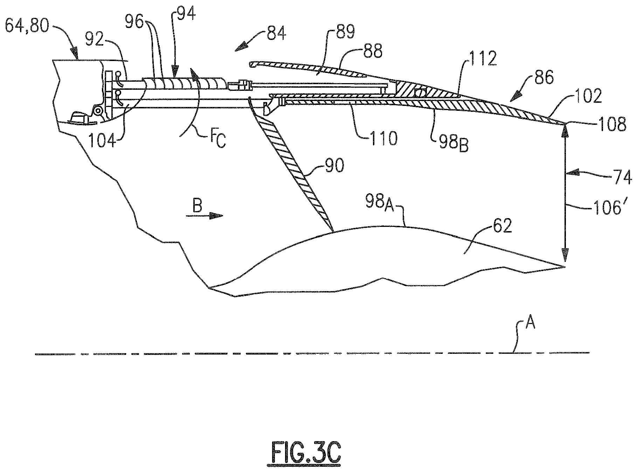

Referring to Figures 3A-3C, the nacelle assembly 60 can include a thrust reverser 84 and/or a variable area nozzle 86 for adjusting various characteristics of the bypass flow path B. Figure 3A illustrates the thrust reverser 84 and the variable area nozzle 86 in stowed positions. Figure 3B illustrates the thrust reverser 84 in the stowed position and the variable area nozzle 86 in a deployed position. Figure 3C illustrates the thrust reverser 84 in a deployed position and the variable area nozzle 86 in deployed position.

The thrust reverser 84 includes a thrust reverser body 88, which is configured with the aft nacelle section 80. The thrust reverser 84 can include one or more blocker doors 90, one or more actuators 92, and/or one or more cascades 94 of turning vanes 96 arranged circumferentially around the longitudinal axis A. The thrust reverser body 88 can have a generally tubular or annular geometry with an axially extending slot or channel configured to accommodate a support structure 82 (Figures 2A-2B). The thrust reverser body 88 includes at least one recess 89 that houses the cascades 94 and the actuators 92 when the thrust reverser 84 is in the stowed position.

Each blocker door 90 is pivotally connected to the thrust reverser body 88. The actuators 92 are adapted to axially translate the thrust reverser body 88 between the stowed and deployed positions. As the thrust reverser body 88 translates aftwards, the blocker doors 90 pivot radially inward into the bypass flow path B and selectively divert or otherwise communicate at least some or substantially all of the bypass air as flow F_{C} through the cascades 94 to provide reverse engine thrust. In other embodiments, the cascades 94 are configured to translate axially with a respective thrust reverser body 88. The thrust reverser body 88 and/or cascades 94 can include one or more circumferential segments that synchronously or independently move between deployed and stowed positions.

In alternative embodiments, the thrust reverser 84 is configured without blocker doors. Opposing surfaces 98_{A}, 98_{B} of the core cowling 62 and/or aft nacelle section 80 may include one or more contoured segments to define a radial distance 100 (Figure 2B). As the aft nacelle section 80 translates aftwards, the radial distance 100 may change (e.g., reduces) to a radial distance 100' (Figure 2A) to partially or fully obstruct the bypass flow path B to provide reverse engine thrust by divert flowing through the cascades 94 (shown in dashed lines at the bottom of Figure 2A).

The variable area nozzle 86 includes a nozzle body 102 and one or more actuators 104. The nozzle body 102 is configured with the aft nacelle section 80, and is arranged radially within and may nest with the thrust reverser body 88. The nozzle body 102 may have a generally tubular or annular geometry with an axially extending slot or channel configured to accommodate the support structure 82 (shown in Figures 2A-2B). The actuators 104 are configured to axially translate the nozzle body 102 between the stowed position of Figure 3A and the deployed position of Figure 3B. As the nozzle body 102 translates aftwards relative to the engine axis A, a radial distance 106 of the bypass nozzle 74 between a trailing edge or aft end 108 of the fan nacelle 64 and the core cowling 62 may change (e.g., increase) to radial distance 106' and thereby change (e.g., increase) a flow area of the bypass nozzle 74. In this manner, the variable area nozzle 86 may adjust a pressure drop or ratio across the bypass flow path B by changing the flow area of the bypass nozzle 74.

The variable area nozzle 86 can define or otherwise include at least one auxiliary port 110 to affect the bypass flow. In the illustrated embodiment, the auxiliary port 110 is defined between an upstream portion 112 of the aft nacelle section 80 and the nozzle body 102 of the variable area nozzle 86 as the nozzle body 102 translates axially aftwards relative to the upstream portion 112. Communication of flow F_{A} (Figure 3B) through a flow area of the auxiliary port 110 increasing an effective flow area of the variable area nozzle 86. The variable area nozzle 86 therefore may adjust a pressure drop or ratio across the bypass flow path B while translating the nozzle body 102 over a relatively smaller axial distance. In alternative embodiments, the variable area nozzle 86 includes one or more bodies (e.g., flaps similar to blocker doors 90) that may move radially and/or axially to change the flow area of the bypass nozzle 74.

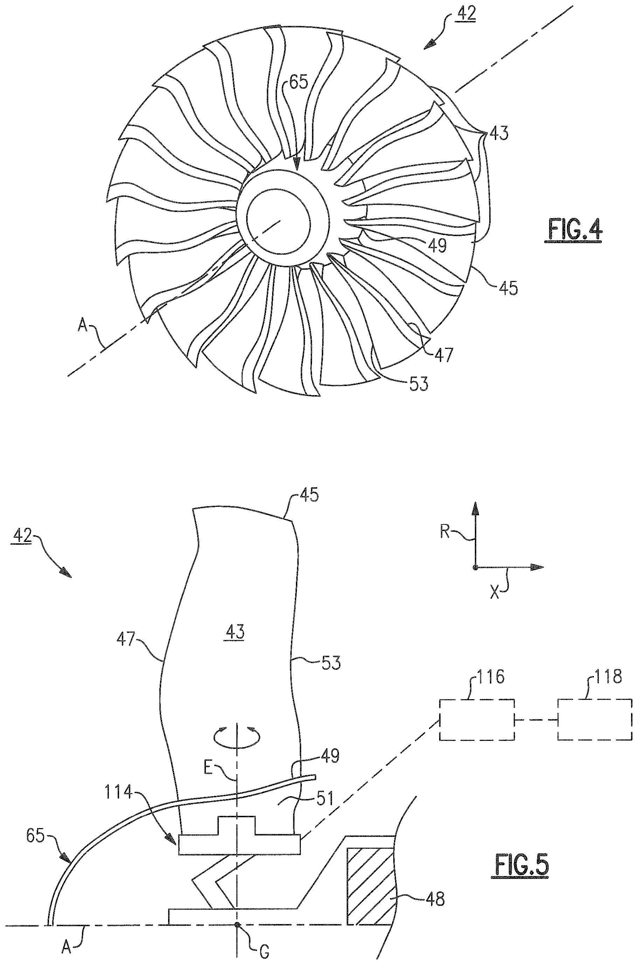

Figure 4 illustrates fan 42 with a plurality of fan blades 43 which are rotatable about a common axis such as engine axis A. Each of the fan blades 43 extends radially between a platform 49 adjacent conical hub 65 and fan tip 45. In some embodiments, the fan 42 includes 26 or fewer fan blades, or more narrowly 20 or fewer fan blades. In embodiments, the fan 42 includes at least 12 to 14 fan blades. In further embodiments, the fan 42 includes 16 or more fan blades, or more narrowly 18 or more fan blades. It may be desirable to change fan pressure or other flow characteristics of fan 42, by adjusting the fan blades 43 to a desired orientation or angle of attack, due to changes in aircraft velocity and thrust requirements during the engine cycle, such as idle, takeoff, climb, cruise and/or descent.

Figure 5 illustrates a partial cross-sectional view of the fan 42 including a pitch change mechanism 114 for varying a pitch of one or more fan blades 43. Each of the fan blades 43 (one shown for illustrative purposes) is rotatably attached to the hub 65 via the pitch change mechanism 114. The pitch change mechanism 114 is configured to cause one or more of the fan blades 43 to rotate about a corresponding fan blade axis E. The fan blade axis E generally extends in a spanwise or radial direction R between tip 45 and root 51, with the radial direction R being perpendicular to chordwise direction X. The fan blade axis E can be perpendicular, or otherwise transverse to, the engine axis A. In an embodiment, the fan blade axis E of each of the fan blades 43 intersects the engine axis A at substantially the same location marked by intersection point G.

In the illustrated embodiment, a root section 51 of the fan blade 43 is attached to the pitch change mechanism 114 via a thrust bearing, for example, and is configured to allow the fan blade 43 to rotate about the fan blade axis E at the section root 51. The pitch change mechanism 114 includes an actuator 116 coupled to a control device 118 to cause the fan blade 43 to rotate to a desired pitch or angle of incidence. Example actuators and control devices can include a hydraulic pump coupled to a hydraulic source, an electrical motor coupled to a dedicated controller or engine controller, or another suitable device. By changing the pitch of one or more of the fan blades 43, the fan bypass airflow is modulated, and performance of the gas turbine engine 20 is able to be improved over a wider range of operating conditions than only a single aerodynamic design point (ADP), such as during takeoff, climb, cruise, descent, and/or landing.

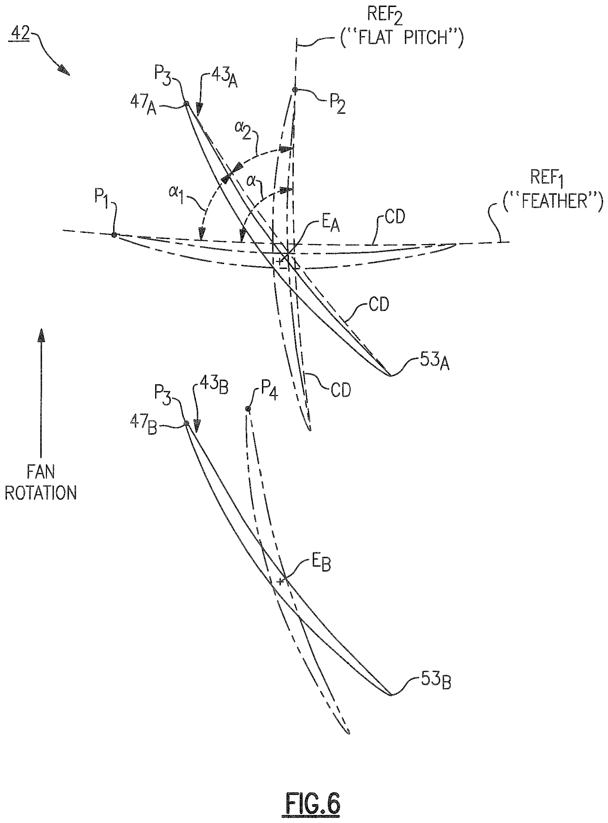

Referring to Figure 6, with continued reference to Figure 5, adjacent fan blades 43_{A} and 43_{B} are depicted at several orientations (shown in dashed lines). Rotation of at least some, or each, of the fan blades 43_{A}, 43_{B} about the corresponding fan blade axis B is bounded or otherwise limited to provide limited pitch change. As illustrated by fan blades 43_{A}, rotation about the corresponding fan blade axis E_{A} is bounded between a first position P₁ and a second position P₂ to define a pitch change angle α. The pitch change angle α is defined relative to chord CD extending between leading edge 47_{A} and trailing edge 53_{A} of fan blade 43_{A} for the first and second positions P₁, P₂. The first position P₁ relates to a first reference plane REF₁ extending in the radial direction R through the engine axis A (Figure 5), and the second position P₂ relates to a second reference plane REF₂ substantially perpendicular to the first reference plane REF₁. Rotation of fan blade 43_{A} counterclockwise about the fan blade axis E_{A} from a neutral position P₃ (i.e., against rotation of the fan 42 about engine axis A) causes the fan blade 43_{A} to unload and can be utilized to reduce flutter and other aerodynamic instability.

Fan blades 43 can be twisted about a stacking axis extending generally in the radial direction R between tip 45 and platform 49, as illustrated in Figure 4. In this configuration, a relative orientation of chord CD varies for at least some span positions. The pitch change angle α can be defined as an average value for each span position between the tip 45 and platform 49, or can be defined at a single span position such as 0% span at platform 49, mid-span, or 100% span at tip 45.

In embodiments, the fan 42 is configured to generate forward thrust at each orientation between the first and second positions P₁, P₂. In arrangements falling outside of the claims, the fan 42 is configured to generate substantially no thrust, at each orientation between the first and second positions P₁, P₂. For example, in arrangements outside the claims, the first position P₁ may be at the first reference plane REF₁ (i.e., "feather" position), and the second position P₂ may be at the second reference plane REF₂ (i.e., "flat pitch" position). In the feather position, fan blade 43_{A} is oriented such that substantially zero thrust is produced or is otherwise limited, and opposes rotation of the fan 42 about the engine axis A. The pitch change mechanism 114 of the invention is configured such that fan 42 substantially does not produce reverse thrust at each orientation of the fan blades 43 between the feather and flat pitch positions. In some arrangements outside the claims, the pitch change mechanism 114 is configured to cause one or more of the fan blades 43 to rotate to the first reference plane REF₁ during a first condition, such as an inflight shutdown (IFSD) event, to reduce drag caused by the fan 42 interacting with oncoming airflow and reduce degradation of the geared architecture 48 otherwise caused by windmilling or rotation of fan 42 when lubrication flow to the geared architecture 48 is reduced below a predetermined threshold, and bound rotation of the fan blades 43 at a position different from the first reference plane REF₁ during a second, different condition such that the fan blades 43 produce forward thrust.

The first position P1 and second position P2 are between, or different from, the first and second reference planes REF₁, REF₂ such that the pitch change angle α is reduced and the fan 42 generates forward thrust at each orientation. The pitch change mechanism 114 prohibits the leading edge 47_{A} of the fan blade 43 _{A} from rotating through the first reference plane REF₁ to produce reverse thrust, thereby reducing a likelihood of fan instability. Rotation is bounded such that the pitch change angle α is less than or equal to 60 degrees, and is also greater than about 20 degrees. In one embodiment, rotation is bounded such that the pitch change angle α is less than or equal to 30 degrees, or more narrowly equal to 20 degrees.

The pitch change angle α can have a first portion α₁ and a second portion α₂ defined relative to neutral position P₃ corresponding to a predetermined aerodynamic design point (ADP). The ADP of fan 42 may correspond to the middle of a flight cycle, idle, cruise, or a top of climb, for example. ADP may be set based on a combination of aircraft velocity and angle of attack or geometry of the fan blades 43, for example. However, propulsive efficiency of the fan blades 43 may be reduced at operating conditions other than the ADP.

In one embodiment, each of first and second portions α₁, α₂ of the pitch change angle α is limited to thirty degrees or less, or more narrowly fifteen degrees or less, such that fan blade 43_{A} can rotate in clockwise and/or counterclockwise directions relative to neutral position P₃, thereby permitting optimization of fan performance over different operating conditions. In another embodiment, the first and second portions α₁, α₂ define different relative values such that permitted rotation relative to neutral position P₃ is asymmetrical. For example, the first portion α₁ may be a first quantity less than an angle defined between feather and flat pitch, and the second portion α₂ may be a second, different quantity such that the first and second quantities are less than or equal to the angle between feather and flat pitch. As another example, the first portion α₁ may be less than or equal to about thirty degrees to "open" the fan blade 43_{A}, and the second portion α₂ may be less than or equal to about ten degrees to "close" the fan blade 43_{A} and reduce loading. In general, the limited variable pitch of fan 42 does not compromise the angle of incidence relative to oncoming airflow, and increases laminar flow and efficiency during cruise or other conditions.

The pitch change mechanism 114 can be configured to return the fan blades 43 to a desired default position in the event of a predetermined condition, such as an inflight shutdown (IFSD) event. For example, if hydraulic pressure or electrical signal loss from actuator 116 or control device 118 to the pitch change mechanism 114 does occur, then the pitch change mechanism 114 may cause the fan blades 43 to rotate to one of the first and second positions P₁, P₂, or an intermediate position. In one embodiment, the pitch change mechanism 114 causes rotation or feathering of the fan blades 43 to the first position P₁, which can reduce aerodynamic drag otherwise caused by the fan blades 43.

The pitch change mechanism 114 described herein can also reduce fan distortion and aerodynamic instability relating to the short inlet configuration of nacelle assembly 60 at takeoff or crosswind conditions, for example, by reducing backpressure downstream of the fan 42. For the purposes of this disclosure, the length L₁ corresponds to the forwardmost location of the leading edge 47 relative to each angular position of the fan blade 43, such as at position P₁ or first reference plane REF₁. The variable area fan nozzle 86 can be eliminated from the nacelle assembly 60 because of the ability to reduce or minimize flutter of the fan blades 43 by varying the pitch. In alternative embodiments, the pitch change mechanism 114 is utilized in combination with the thrust reverser 84 and/or variable area fan nozzle 86.

The fan 42 can be configured to provide mistuning of one or more of the fan blades 43 relative to one or more other fan blades 43. For example, the fan 42 can include at least a first set of fan blades 43 and a second set of fan blades 43. The first set of fan blades 43 are rotatable such that the orientation of each of the first set of fan blades 43 differs from the orientation of each the second set of fan blades 43 during a predefined operating condition, such as takeoff or climb. Although Figure 6 illustrates mistuning of two adjacent fan blades 43_{A}, 43_{B}, the pitch change mechanism 114 can be configured to change the relative orientation of any of the fan blades 43. As seen in Figure 6, fan blade 43_{A} can be rotated to the first position P₁, and fan blade 43_{B} can be rotated to a fourth position P₄ such that the orientations relative to the engine axis A differ from each other. The pitch change mechanism 114 can be configured to cause the fan blades 43 to return to a substantially common pitch change angle α at ADP, at another predefined or predetermined operating condition including a phase of flight (e.g., takeoff, climb, cruise and/or descent) or a ground operation (e.g., idle or taxi), or upon command, to provide the desired fan performance.

It should be understood that relative positional terms such as "forward," "aft," "upper," "lower," "above," "below," and the like are with reference to the normal operational attitude of the vehicle and should not be considered otherwise limiting.

The foregoing description is exemplary rather than defined by the limitations within. Many modifications and variations of the present invention are possible in light of the above teachings. The scope of protection of the present invention is defined by the appended claims.

## Claims

1. A gas turbine engine (20) comprising:
a fan (42) including a plurality of fan blades (43) rotatable about an engine axis (A), a diameter of the fan (42) having a dimension (D₁) that is based on a dimension of the fan blades (43) established between circumferentially outermost edges or tips of the fan blades (43) corresponding to leading edges (47), each of the fan blades (43) having a leading edge (47) and being rotatable about a fan blade axis (E) that is substantially transverse to the engine axis (A); and
a nacelle assembly (60) arranged at least partially about the fan (42), the nacelle assembly (60) including an inlet portion (76) forward of the fan (42) and a bypass flow path, a length of the inlet portion (76) having a dimension (L₁) at the engine axis (A) between a location of a plane including a forwardmost part of the leading edge (47) of at least some of the fan blades (43) and a plane including the forwardmost edges on the inlet portion (76), wherein a dimensional relationship of L₁/D₁ is less than or equal to 0.4, **characterised in that**
rotation of each of the fan blades (43) about the corresponding fan blade axis (E) is bounded between a first position (P₁) and a second position (P₂) to define a pitch change angle (α) defined relative to a chord (CD) extending between the leading edge (47) and a trailing edge (53) of each of the fan blades (43) for the first and second position (P₁, P₂), wherein the first position (P₁) and the second position (P₂) are between a first reference plane (REF₁) extending in a radial direction through the engine axis (A) and a second reference plane (REF₂) perpendicular to the first reference plane (REF₁), wherein the pitch change angle (α) is less than or equal to 60 degrees and is also greater than 20 degrees, wherein a pitch angle change mechanism (114) prohibits the leading edge (47) of the fan blade (43) from rotating through the first reference plane (REF₁) to produce reverse thrust.

2. The gas turbine engine as recited in claim 1, wherein the dimensional relationship of L₁/D₁ is equal to or greater than 0.24.

3. The gas turbine engine as recited in claim 1 or 2, wherein the plurality of fan blades (43) includes a first fan blade (43_{A}) and a second fan blade (43_{B}), the first fan blade (43_{A}) rotatable such that an orientation of the first fan blade (43_{A}) differs from an orientation of the second fan blade (43_{B}) relative to the engine axis (A).

4. The gas turbine engine as recited in any preceding claim, comprising a fixed area fan nozzle in communication with the fan (42).

5. The gas turbine engine as recited in any preceding claim, wherein the nacelle assembly (60) includes a thrust reverser (84) configured to selectively communicate a portion of fan bypass airflow from the bypass flow path.

6. The gas turbine engine as recited in claim 1, 2 or 3, wherein the nacelle assembly (60) includes:
a thrust reverser (84) configured to selectively communicate a portion of fan bypass airflow from the bypass flow path;
a first nacelle section (78) arranged at least partially about the fan (42);
a second nacelle section (80) arranged at least partially about a core cowling (62) to define the bypass flow path, the thrust reverser (84) being positioned axially between the first nacelle section (78) and the second nacelle section (80), and the second nacelle section (80) moveable relative to the first nacelle section (78) to vary an exit area of the bypass flow path.

7. The gas turbine engine as recited in claim 6, wherein the nacelle assembly includes a variable area fan nozzle (86) movable relative to the second nacelle section (80) to vary the exit area.

8. The gas turbine engine as recited in any preceding claim, wherein:
the fan (42) includes between 12 and 20 fan blades (43);
the fan (42) is configured to deliver a portion of air into a compressor section (24) and a portion of air into the bypass flow path; and
a bypass ratio which is defined as a volume of air passing to the bypass flow path compared to a volume of air passing into the compressor section (24) is greater than or equal to 12, wherein, optionally, the fan (42) is configured to define a pressure ratio of between 1.2 and 1.4 at a predefined operating condition.

9. The gas turbine engine as recited in claim 1, wherein a root section (51) of each of the fan blades (43) is rotatable about the corresponding fan blade axis (E) to modulate airflow delivered to a bypass flow path; and further comprising:
a geared architecture (48) configured to drive the fan (42) at a different speed than a turbine section (28); and
wherein the fan (42) is configured to generate forward thrust or zero thrust in respective ones of the first and second positions (P₁, P₂) wherein, optionally, the plurality of fan blades (43) include a first set of fan blades and a second set of fan blades, the first set of fan blades rotatable such that an orientation of each of the first set of fan blades differs from an orientation of each of the second set of fan blades at a predefined operating condition.

10. The gas turbine engine as recited in claim 9, comprising:
a fan nacelle (64) defining the bypass flow path terminating at a trailing edge; and
a thrust reverser configured to selectively communicate airflow from the bypass flow path at a location forward of the trailing edge, and further optionally comprising a variable area fan nozzle (86) movable relative to the fan nacelle (64) to vary an exit area of the bypass flow path.

11. A method of operating a gas turbine engine comprising:
rotating a plurality of fan blades (43) of a fan (42) about a common axis at a first speed;
rotating a fan drive turbine at a second, different speed to drive the plurality of fan blades (43);
wherein the plurality of fan blades (43) define a pressure ratio that is less than or equal to 1.4 and equal to or greater than 1.2 at a predetermined operating condition;
wherein a nacelle assembly (60) is arranged at least partially about the fan (42), the nacelle assembly (60) including an inlet portion (76) forward of the fan (42) and a bypass flow path, a length of the inlet portion (76) having a dimension (L₁) at the engine axis (A) between a location of a plane including a forwardmost part of a leading edge (47) of at least some of the fan blades (43) and a plane including the forwardmost edges on the inlet portion (76), wherein a diameter of the fan (42) has a dimension (D₁) that is based on a dimension of the fan blades (43) established between circumferentially outermost edges or tips of the fan blades corresponding to leading edges, wherein a dimensional relationship of L₁/D₁ is less than or equal to 0.4,
**characterised in that**:
the method further comprises rotating at least some of the plurality of fan blades (43) about a corresponding fan blade axis (E) to modulate fan bypass airflow delivered to a bypass duct, rotation of each of the plurality of fan blades (43) about the corresponding fan blade axis (E) being bounded to define a pitch change angle (α) defined relative to a chord (CD) extending between a leading edge (74) and a trailing edge (53) of each of the fan blades (43) for a first and second position (P₁, P₂), such that the fan blades generate forward thrust or zero thrust for each position relative to the corresponding fan blade axis (E);
the pitch change angle (α) is less than or equal to 60 degrees and is also greater than 20 degrees; and
a pitch change mechanism (114) prohibits the leading edge (47) off the fan blade from rotating through the first reference plane (REF₁) to produce reverse thrust.

12. The method as recited in claim 11, comprising rotating at least one of the plurality of fan blades (43) to a first orientation during a first operating condition such that the first orientation differs from a second orientation of an adjacent one of the plurality of fan blades (43).

13. The method as recited in claim 12, comprising rotating the at least one of the plurality of fan blades (43) during a second operating condition to a third orientation that is substantially the same as the second orientation.

14. The method as recited in claim 12 or 13, comprising communicating fan bypass airflow from the bypass duct to generate reverse thrust.

15. The method as recited in claim 12, 13 or 14, comprising moving a second nacelle section (80) relative to a first nacelle section (78) to vary an exit area of the bypass duct.

## Patentansprüche

1. Gasturbinentriebwerk (20), umfassend:
ein Gebläse (42), einschließend eine Vielzahl von Gebläseschaufeln (43), die um eine Triebwerksachse (A) drehbar sind, wobei ein Durchmesser des Gebläses (42) eine Abmessung (D₁) aufweist, die auf einer Abmessung der Gebläseschaufeln (43) basiert, die zwischen äußersten Umfangskanten oder Spitzen der Gebläseschaufeln (43) eingeführt wird, die Vorderkanten (47) entsprechen, wobei jede der Gebläseschaufeln (43) eine Vorderkante (47) aufweist und um eine Gebläseschaufelachse (E) drehbar ist, die im Wesentlichen quer zu der Triebwerksachse (A) verläuft; und
eine Gondelbaugruppe (60), die zumindest teilweise um das Gebläse (42) angeordnet ist, wobei die Gondelbaugruppe (60) einen Einlassteil (76) vor dem Gebläse (42) und einen Bypass-Strömungsweg einschließt, wobei eine Länge des Einlassteils (76) an der Triebwerksachse (A) zwischen einer Stelle einer Ebene, einschließend ein vorderstes Teil der Vorderkante (47) von zumindest einigen der Gebläseschaufeln (43) und einer Ebene, einschließend die vordersten Kanten an dem Einlassteil (76), eine Abmessung (L₁) aufweist, wobei eine Größenbeziehung von L₁/D₁ kleiner gleich 0,4 ist, **dadurch gekennzeichnet, dass**
eine Drehung von jeder der Gebläseschaufeln (43) um die entsprechende Gebläseschaufelachse (E) zwischen einer ersten Position (P₁) und einer zweiten Position (P₂) begrenzt ist, um einen Neigungsänderungswinkel (α) zu definieren, der in Bezug auf eine Sehne (CD) definiert ist, die sich zwischen der Vorderkante (47) und einer Hinterkante (53) von jeder der Gebläseschaufeln (43) für die erste und zweite Position (P₁, P₂) erstreckt, wobei die erste Position (P₁) und die zweite Position (P₂) zwischen einer ersten Bezugsebene (REF₁), die sich in einer radialen Richtung durch die Triebwerksachse (A) erstreckt und einer zweiten Bezugsebene (REF₂) liegen, die senkrecht zu der ersten Bezugsebene (REF₁) verläuft, wobei der Neigungsänderungswinkel (α) kleiner gleich 60 Grad ist und außerdem größer als 20 Grad ist, wobei ein Neigungswinkeländerungsmechanismus (114) verhindert, dass sich die Vorderkante (47) der Gebläseschaufel (43) durch die erste Bezugsebene (REF₁) dreht, um einen Umkehrschub zu erzeugen.

2. Gasturbinentriebwerk nach Anspruch 1, wobei die Größenbeziehung von L₁/D₁ größer gleich 0,24 ist.

3. Gasturbinentriebwerk nach Anspruch 1 oder 2, wobei die Vielzahl von Gebläseschaufeln (43) eine erste Gebläseschaufel (43_{A}) und eine zweite Gebläseschaufel (43_{B}) einschließt, wobei die erste Gebläseschaufel (43_{A}) so drehbar ist, dass sich eine Ausrichtung der ersten Gebläseschaufel (43_{A}) von einer Ausrichtung der zweiten Gebläseschaufel (43_{B}) in Bezug auf die Triebwerksachse (A) unterscheidet.

4. Gasturbinentriebwerk nach einem vorhergehenden Anspruch, umfassend eine feste Gebläsedüse, die mit dem Gebläse (42) in Kommunikation steht.

5. Gasturbinentriebwerk nach einem vorhergehenden Anspruch, wobei die Gondelbaugruppe (60) einen Schubumkehrer (84) einschließt, der konfiguriert ist, um selektiv einen Teil eines Gebläse-Bypass-Luftstroms von dem Bypass-Strömungsweg zu kommunizieren.

6. Gasturbinentriebwerk nach Anspruch 1, 2 oder 3, wobei die Gondelbaugruppe (60) Folgendes einschließt:
einen Schubumkehrer (84), der konfiguriert ist, um selektiv einen Teil eines Gebläse-Bypass-Luftstroms von dem Bypass-Strömungsweg zu kommunizieren;
einen ersten Gondelabschnitt (78), der zumindest teilweise um das Gebläse (42) angeordnet ist;
einen zweiten Gondelabschnitt (80), der zumindest teilweise um eine Core Cowling (62) angeordnet ist, um den Bypass-Strömungsweg zu definieren, wobei der Schubumkehrer (84) axial zwischen dem ersten Gondelabschnitt (78) und dem zweiten Gondelabschnitt (80) positioniert ist, und der zweite Gondelabschnitt (80) in Bezug auf den ersten Gondelabschnitt (78) beweglich ist, um einen Austrittsbereich des Bypass-Strömungswegs zu verändern.

7. Gasturbinentriebwerk nach Anspruch 6, wobei die Gondelbaugruppe eine verstellbare Gebläsedüse (86) einschließt, die in Bezug auf den zweiten Gondelabschnitt (80) beweglich ist, um den Austrittsbereich zu verändern.

8. Gasturbinentriebwerk nach einem vorhergehenden Anspruch, wobei:
das Gebläse (42) zwischen 12 und 20 Gebläseschaufeln (43) einschließt;
das Gebläse (42) konfiguriert ist, um einen Teil von Luft in einen Verdichterabschnitt (24) und einen Teil von Luft in den Bypass-Strömungsweg abzugeben; und
ein Bypass-Verhältnis, das als ein Volumen von Luft, die in den Bypass-Strömungsweg gelangt, im Vergleich zu einem Volumen von Luft definiert ist, die in den Verdichterabschnitt (24) gelangt, größer gleich 12 ist, wobei gegebenenfalls das Gebläse (42) konfiguriert ist, um ein Druckverhältnis zwischen 1,2 und 1,4 in einem vordefinierten Betriebszustand zu definieren.

9. Gasturbinentriebwerk nach Anspruch 1, wobei ein Fußabschnitt (51) von jeder der Gebläseschaufeln (43) um die entsprechende Gebläseschaufelachse (E) drehbar ist, um einen Luftstrom zu modulieren, der an einen Bypass-Strömungsweg abgegeben wird; und ferner umfassend:
eine Getriebearchitektur (48), die konfiguriert ist, um das Gebläse (42) mit einer anderen Drehzahl anzutreiben als einen Turbinenabschnitt (28); und
wobei das Gebläse (42) konfiguriert ist, um einen Vorschub oder Nullschub in jeweiligen der ersten und zweiten Position (P₁, P₂) zu erzeugen, wobei gegebenenfalls die Vielzahl von Gebläseschaufeln (43) einen ersten Satz von Gebläseschaufeln und einen zweiten Satz von Gebläseschaufeln einschließt, wobei der erste Satz von Gebläseschaufeln so drehbar ist, dass sich eine Ausrichtung von jedem des ersten Satzes von Gebläseschaufeln von einer Ausrichtung von jedem des zweiten Satzes von Gebläseschaufeln in einem vordefinierten Betriebszustand unterscheidet.

10. Gasturbinentriebwerk nach Anspruch 9, umfassend:
eine Gebläsegondel (64), die den Bypass-Strömungsweg definiert, der an einer Hinterkante endet; und
einen Schubumkehrer, der konfiguriert ist, um selektiv einen Luftstrom von dem Bypass-Strömungsweg an einer Stelle vor der Hinterkante zu kommunizieren, und ferner gegebenenfalls umfassend eine verstellbare Gebläsedüse (86), die in Bezug auf die Gebläsegondel (64) beweglich ist, um einen Austrittsbereich des Bypass-Strömungswegs zu verändern.

11. Verfahren zum Betreiben eines Gasturbinentriebwerks, umfassend:
Drehen einer Vielzahl von Gebläseschaufeln (43) eines Gebläses (42) um eine gemeinsame Achse mit einer ersten Drehzahl;
Drehen einer Gebläseantriebsturbine mit einer zweiten, anderen Drehzahl zum Antreiben der Vielzahl von Gebläseschaufeln (43) ;
wobei die Vielzahl von Gebläseschaufeln (43) ein Druckverhältnis definiert, das in einem vorgegebenen Betriebszustand kleiner gleich 1,4 und größer gleich 1,2 ist;
wobei eine Gondelbaugruppe (60) zumindest teilweise um das Gebläse (42) angeordnet ist, wobei die Gondelbaugruppe (60) einen Einlassteil (76) vor dem Gebläse (42) und einen Bypass-Strömungsweg einschließt, wobei eine Länge des Einlassteils (76) an der Triebwerksachse (A) zwischen einer Stelle einer Ebene, einschließend ein vorderstes Teil einer Vorderkante (47) von zumindest einigen der Gebläseschaufeln (43) und einer Ebene, einschließend die vordersten Kanten an dem Einlassteil (76), eine Abmessung (L₁) aufweist, wobei ein Durchmesser des Gebläses (42) eine Abmessung (D₁) aufweist, die auf einer Abmessung der Gebläseschaufeln (43) basiert, die zwischen äußersten Umfangskanten oder Spitzen der Gebläseschaufeln eingeführt wird, die Vorderkanten entsprechen, wobei eine Größenbeziehung von L₁/D₁ kleiner gleich 0,4 ist,
**dadurch gekennzeichnet, dass**:
das Verfahren ferner das Drehen von zumindest einigen der Vielzahl von Gebläseschaufeln (43) um eine entsprechende Gebläseschaufelachse (E) umfasst, um einen Gebläse-Bypass-Luftstrom zu modulieren, der an einen Bypass-Kanal abgegeben wird, wobei die Drehung von jeder der Vielzahl von Gebläseschaufeln (43) um die entsprechende Gebläseschaufelachse (E) begrenzt ist, um einen Neigungsänderungswinkel (α) zu definieren, der in Bezug auf eine Sehne (CD) definiert ist, die sich zwischen einer Vorderkante (74) und einer Hinterkante (53) von jeder der Gebläseschaufeln (43) für eine erste und zweite Position (P₁, P₂) erstreckt, sodass die Gebläseschaufeln einen Vorschub oder Nullschub für jede Position in Bezug auf die entsprechende Gebläseschaufelachse (E) erzeugen;
der Neigungsänderungswinkel (α) kleiner gleich 60 Grad ist und außerdem größer als 20 Grad ist; und
ein Neigungsänderungsmechanismus (114) verhindert, dass sich die Vorderkante (47) der Gebläseschaufel durch die erste Bezugsebene (REF₁) dreht, um einen Umkehrschub zu erzeugen.

12. Verfahren nach Anspruch 11, umfassend das Drehen von mindestens einer der Vielzahl von Gebläseschaufeln (43) in eine erste Ausrichtung während eines ersten Betriebszustands, sodass sich die erste Ausrichtung von einer zweiten Ausrichtung einer benachbarten der Vielzahl von Gebläseschaufeln (43) unterscheidet.

13. Verfahren nach Anspruch 12, umfassend das Drehen der mindestens einen der Vielzahl von Gebläseschaufeln (43) während eines zweiten Betriebszustands in eine dritte Ausrichtung, die im Wesentlichen der zweiten Ausrichtung entspricht.

14. Verfahren nach Anspruch 12 oder 13, umfassend das Kommunizieren eines Gebläse-Bypass-Luftstroms aus dem Bypass-Kanal, um einen Umkehrschub zu erzeugen.

15. Verfahren nach Anspruch 12, 13 oder 14, umfassend das Bewegen eines zweiten Gondelabschnitts (80) in Bezug auf einen ersten Gondelabschnitt (78), um einen Austrittsbereich des Bypass-Kanals zu verändern.

## Revendications

1. Moteur à turbine à gaz (20) comprenant :
une soufflante (42) comportant une pluralité d'aubes de soufflante (43) pouvant tourner autour d'un axe du moteur (A), un diamètre de la soufflante (42) ayant une dimension (D₁) qui est basée sur une dimension des aubes de soufflante (43) établie entre des bords ou pointes circonférentiellement les plus à l'extérieur des aubes de soufflante (43) correspondant à des bords d'attaque (47), chacune des aubes de soufflante (43) ayant un bord d'attaque (47) et pouvant tourner autour d'un axe d'aube de soufflante (E) qui est sensiblement transversal à l'axe du moteur (A) ; et
un ensemble nacelle (60) agencé au moins partiellement autour de la soufflante (42), l'ensemble nacelle (60) comportant une partie d'entrée (76) à l'avant de la soufflante (42) et une voie d'écoulement de dilution, une longueur de la partie d'entrée (76) ayant une dimension (L₁) au niveau de l'axe du moteur (A) entre un emplacement d'un plan comportant une partie la plus en avant du bord d'attaque (47) d'au moins certaines des aubes de soufflante (43) et un plan comportant les bords les plus en avant sur la partie d'entrée (76), dans lequel une relation dimensionnelle de L₁/D₁ est inférieure ou égale à 0,4, **caractérisé en ce que**
une rotation de chacune des aubes de soufflante (43) autour de l'axe d'aube de soufflante (E) correspondant est limitée entre une première position (P₁) et une seconde position (P₂) pour définir un angle de changement de pas (α) défini par rapport à une corde (CD) s'étendant entre le bord d'attaque (47) et un bord de fuite (53) de chacune des aubes de soufflante (43) pour les première et seconde positions (P₁, P₂), dans lequel la première position (P₁) et la seconde position (P₂) sont situées entre un premier plan de référence (REF₁) s'étendant dans une direction radiale à travers l'axe du moteur (A) et un second plan de référence (REF₂) perpendiculaire au premier plan de référence (REF₁), dans lequel l'angle de changement de pas (α) est inférieur ou égal à 60 degrés et est également supérieur à 20 degrés, dans lequel un mécanisme de changement d'angle de pas (114) empêche le bord d'attaque (47) de l'aube de soufflante (43) de tourner à travers le premier plan de référence (REF₁) pour produire une poussée inverse.

2. Moteur à turbine à gaz selon la revendication 1, dans lequel la relation dimensionnelle de L₁/D₁ est supérieure ou égale à 0,24.

3. Moteur à turbine à gaz selon la revendication 1 ou 2, dans lequel la pluralité d'aubes de soufflante (43) comporte une première aube de soufflante (43_{A}) et une seconde aube de soufflante (43_{B}), la première aube de soufflante (43_{A}) pouvant tourner de sorte qu'une orientation de la première aube de soufflante (43_{A}) diffère d'une orientation de la seconde aube de soufflante (43_{B}) par rapport à l'axe du moteur (A).

4. Moteur à turbine à gaz selon une quelconque revendication précédente, comprenant une tuyère de soufflante à section fixe en communication avec la soufflante (42).

5. Moteur à turbine à gaz selon une quelconque revendication précédente, dans lequel l'ensemble nacelle (60) comporte un inverseur de poussée (84) conçu pour conduire sélectivement une partie de l'écoulement d'air de dilution de soufflante à partir de la voie d'écoulement de dilution.

6. Moteur à turbine à gaz selon la revendication 1, 2 ou 3, dans lequel l'ensemble nacelle (60) comporte :
un inverseur de poussée (84) conçu pour conduire sélectivement une partie d'écoulement d'air de dilution de soufflante à partir de la voie d'écoulement de dilution ;
une première section de nacelle (78) agencée au moins partiellement autour de la soufflante (42) ;
une seconde section de nacelle (80) agencée au moins partiellement autour d'un carénage central (62) pour définir la voie d'écoulement de dilution, l'inverseur de poussée (84) étant positionné axialement entre la première section de nacelle (78) et la seconde section de nacelle (80), et la seconde section de nacelle (80) peut se déplacer par rapport à la première section de nacelle (78) pour faire varier une surface de sortie de la voie d'écoulement de dilution.

7. Moteur à turbine à gaz selon la revendication 6, dans lequel l'ensemble nacelle comporte une tuyère de soufflante à section variable (86) pouvant se déplacer par rapport à la seconde section de nacelle (80) pour faire varier la surface de sortie.

8. Moteur à turbine à gaz selon une quelconque revendication précédente, dans lequel :
la soufflante (42) comporte de 12 à 20 aubes de soufflante (43) ;
la soufflante (42) est conçue pour délivrer une partie de l'air dans une section de compresseur (24) et une partie de l'air dans la voie d'écoulement de dilution ; et
un taux de dilution, qui est défini comme un volume d'air passant dans la voie d'écoulement de dilution par rapport à un volume d'air passant dans la section de compresseur (24), est supérieur ou égal à 12, dans lequel, éventuellement, la soufflante (42) est conçue pour définir un taux de compression compris entre 1,2 et 1,4 à une condition de fonctionnement prédéfinie.

9. Moteur à turbine à gaz selon la revendication 1, dans lequel une section de pied (51) de chacune des aubes de soufflante (43) peut tourner autour de l'axe d'aube de soufflante (E) correspondant pour moduler l'écoulement d'air délivré à une voie d'écoulement de dilution ; et comprenant en outre :
une architecture à engrenages (48) conçue pour entraîner la soufflante (42) à une vitesse différente de celle d'une section de turbine (28) ; et
dans lequel la soufflante (42) est conçue pour générer une poussée vers l'avant ou une poussée nulle dans des positions respectives parmi les première et seconde positions (P₁, P₂) dans lequel, éventuellement, la pluralité d'aubes de soufflante (43) comportent un premier ensemble d'aubes de soufflante et un second ensemble d'aubes de soufflante, le premier ensemble d'aubes de soufflante pouvant tourner de sorte qu'une orientation de chacune dans le premier ensemble d'aubes de soufflante diffère d'une orientation de chacune dans le second ensemble d'aubes de soufflante à une condition de fonctionnement prédéfinie.

10. Moteur à turbine à gaz selon la revendication 9, comprenant :
une nacelle de soufflante (64) définissant la voie d'écoulement de dilution se terminant au niveau d'un bord de fuite ; et
un inverseur de poussée conçu pour conduire sélectivement l'écoulement d'air à partir de la voie d'écoulement de dilution au niveau d'un emplacement situé à l'avant du bord de fuite, et comprenant en outre éventuellement une tuyère de soufflante à section variable (86) pouvant se déplacer par rapport à la nacelle de soufflante (64) pour faire varier une surface de sortie de la voie d'écoulement de dilution.

11. Procédé de fonctionnement d'un moteur à turbine à gaz comprenant :
la rotation d'une pluralité d'aubes de soufflante (43) d'une soufflante (42) autour d'un axe commun à une première vitesse ;
la rotation d'une turbine d'entraînement de soufflante à une seconde vitesse différente pour entraîner la pluralité d'aubes de soufflante (43) ;
dans lequel la pluralité d'aubes de soufflante (43) définissent un taux de compression qui est inférieur ou égal à 1,4 et supérieur ou égal à 1,2 à une condition de fonctionnement prédéterminée ;
dans lequel un ensemble nacelle (60) est agencé au moins partiellement autour de la soufflante (42), l'ensemble nacelle (60) comportant une partie d'entrée (76) à l'avant de la soufflante (42) et une voie d'écoulement de dilution, une longueur de la partie d'entrée (76) ayant une dimension (L₁) au niveau de l'axe du moteur (A) entre un emplacement d'un plan comportant une partie la plus en avant du bord d'attaque (47) d'au moins certaines des aubes de soufflante (43) et un plan comportant les bords les plus en avant sur la partie d'entrée (76), dans lequel un diamètre de la soufflante (42) a une dimension (D₁) qui est basée sur une dimension des aubes de soufflante (43) établie entre des bords ou pointes circonférentiellement les plus à l'extérieur des aubes de soufflante correspondant à des bords d'attaque, dans lequel une relation dimensionnelle de L₁/D₁ est inférieure ou égale à 0,4,
**caractérisé en ce que** :
le procédé comprend en outre la rotation d'au moins certaines parmi la pluralité d'aubes de soufflante (43) autour d'un axe d'aube de soufflante (E) correspondant pour moduler l'écoulement d'air de dilution de soufflante délivré à un conduit de dérivation, la rotation de chacune parmi la pluralité d'aubes de soufflante (43) autour de l'axe d'aube de soufflante (E) correspondant étant limitée pour définir un angle de changement de pas (α) défini par rapport à une corde (CD) s'étendant entre un bord d'attaque (74) et un bord de fuite (53) de chacune des aubes de soufflante (43) pour une première et une seconde positions (P₁, P₂), de sorte que les aubes de soufflante génèrent une poussée vers l'avant ou une poussée nulle pour chaque position par rapport à l'axe d'aube de soufflante (E) correspondant ;
l'angle de changement de pas (α) est inférieur ou égal à 60 degrés et est également supérieur à 20 degrés ; et
un mécanisme de changement de pas (114) empêche le bord d'attaque (47) de l'aube de soufflante de tourner à travers le premier plan de référence (REF₁) pour produire une poussée inverse.

12. Procédé selon la revendication 11, comprenant la rotation d'au moins une parmi la pluralité d'aubes de soufflante (43) dans une première orientation pendant une première condition de fonctionnement de sorte que la première orientation diffère d'une deuxième orientation d'une aube de soufflante adjacente parmi la pluralité d'aubes de soufflante (43).

13. Procédé selon la revendication 12, comprenant la rotation de l'au moins une aube de soufflante parmi la pluralité d'aubes de soufflante (43) pendant une seconde condition de fonctionnement dans une troisième orientation qui est sensiblement identique à la deuxième orientation.

14. Procédé selon la revendication 12 ou 13, consistant à conduire un écoulement d'air de dilution de soufflante à partir du conduit de dérivation pour générer une poussée inverse.

15. Procédé selon la revendication 12, 13 ou 14, comprenant le déplacement d'une seconde section de nacelle (80) par rapport à une première section de nacelle (78) pour faire varier une surface de sortie du conduit de dérivation.
